# EUROPÄISCHE PATENTSCHRIFT

(11) **EP 1 332 304 B1**
(45) Veröffentlichungstag und Bekanntmachung des Hinweises auf die Patenterteilung: **03.08.2005**
(21) Anmeldenummer: 01982466.3
(22) Anmeldetag: 07.11.2001
(51) Int. Cl.: F16H 61/16

(54) **VERFAHREN ZUR STEUERUNG EINES AUTOMATGETRIEBES EINES KRAFTFAHRZEUGES BEI EINER SPONTANEN GAS-/PEDALRÜCKNAHME**
METHOD FOR CONTROLLING AN AUTOMATIC GEARBOX OF A MOTOR VEHICLE IN THE EVENT THAT THE GAS/PEDAL IS SPONTANEOUSLY RELEASED
PROCEDE DE COMMANDE DE LA BOITE DE VITESSES AUTOMATIQUE D'UN VEHICULE AUTOMOBILE LORS DU RELACHEMENT SPONTANE DE GAZ/PEDALE

(30) Priorität: 11.11.2000 DE 10055957
(43) Veröffentlichungstag der Anmeldung: 06.08.2003
(73) Patentinhaber: ZF FRIEDRICHSHAFEN Aktiengesellschaft, 88038 Friedrichshafen (DE)
(72) Erfinder: HENNEKEN, Markus, 88079 Kressbronn (DE); JAUCH, Friedemann, 88069 Tettnang (DE); SCHULER, Franz-Jozef, 88079 Kressbronn (DE); MAUZ, Thomas, 88079 Kressbronn (DE); KIEFER, Michael, 88048 Friedrichshafen (DE)
(86) Internationale Anmeldenummer: PCT/EP2001/012847
(87) Internationale Veröffentlichungsnummer: WO 2002/038987

(56) Entgegenhaltungen:
- EP-A- 0 127 507
- EP-A- 0 375 155
- EP-A- 0 471 102
- DE-A- 4 120 566
- DE-A- 19 849 059
- FR-A- 2 737 760

## Beschreibung

Die Erfindung betrifft ein Verfahren zur Steuerung eines Automatgetriebes eines Kraftfahrzeuges bei einer spontanen Gas-/Pedalrücknahme nach der im Patentanspruch 1 näher definierten Art.

Wie hinlänglich bekannt, werden moderne Automatgetriebe in Kraftfahrzeugen von einer elektronischen Getriebesteuerung (EGS) angesteuert, welche zur selbsttätigen Auswahl eines abgelegten Schaltprogramms, das beispielsweise eine bekannte Fahrertyp-Erkennung, eine Umwelterkennung, eine Fahrsituationserkennung oder eine Erkennung eines manuellen Eingriffs beschreibt, und zur situationsabhängigen Gangwahl mit weiteren Rechen- und Steuereinheiten verschiedener Aggregate kommuniziert. Die Betriebspunkte, in denen von der elektronischen Getriebesteuerung ein Befehl zum Hochschalten oder Rückschalten an die Hydraulik ausgegeben wird, werden durch in der elektronischen Getriebesteuerung abgelegte Schaltkennlinien festgelegt, welche üblicherweise als Funktion einer Fahrzeuggeschwindigkeit und einer Stellung des Fahrpedals dargestellt sind. Bei älteren Kraftfahrzeugen wird die Stellung des Fahrpedals mechanisch über eine Drosselklappenstellung erfaßt, während bei modernen Kraftfahrzeugen mit einem "elektronischen Gas" die Erkennung der Fahrpedalstellung elektronisch erfolgt.

Die Lebenserfahrung lehrt, daß der Lenker eines Kraftfahrzeuges in bestimmten Fahrsituationen schnell den Fuß vom Gaspedal wegnimmt. Bei einer ausreichend hohen Fahrzeuggeschwindigkeit erfolgt dabei häufig eine Hochschaltung in einen ökonomischeren Gang, wie z.B. vom dritten in den vierten Gang. Im Schubbetrieb fällt dabei die Motordrehzahl mit dem Hochschalten ab.

Ein solches Hochschalten ist bei einem anschließend erforderlichen oder gewünschten Beschleunigen hinderlich, da wieder mindestens eine zeitraubende Rückschaltung durchgeführt werden muß, um über die gewünschte Motorleistung verfügen zu können.

In einigen Fahrsituationen stellt ein solches Hochschalten und anschließendes Rückschalten jedoch nicht nur eine Fahrkomfortminderung dar. Denn geschieht dies bei einer kurzen Pedalrückname bzw. Gasrücknahme, auch "FastOff" genannt, kann dies beispielsweise bei einem abgebrochenen bzw. kurz unterbrochenen Überholvorgang auch zu einer Gefahrensituation führen, da sich erstens keine gewünschte Verzögerung des Fahrzeugs bei dem "FastOff" einstellt und zweitens nicht der gewünschte Drehzahlbereich mit maximalem Antriebsleistung vorliegt, wenn zum Beispiel der Überholvorgang fortgesetzt wird.

Aus der EP 0 574 965 A1 ist ein Verfahren zur Ermittlung eines Schaltsignals aus einem Schaltkennfeld bekannt, mit dem eine Hochschaltung des Getriebes im Schubbetrieb und gegebenenfalls unter hoher Querbeschleunigung verhindert werden soll. Hierzu wird das Überschreiten von Hochschaltlinien des Schaltfeldes durch den sich aus der augenblicklichen Fahrgeschwindigkeit und einer Dosselklappenstellung ergebenen Betriebspunkt festgehalten. Die Stellung des Fahrpedals wird gemessen und beim Überschreiten der Hochschaltkennlinie in eine Fahrpedalgeschwindigkeit umgewandelt. Der so erhaltene Meßwert der Fahrpedalgeschwindigkeit wird mit einem in der Getriebesteuerung abgespeicherten Grenzwert verglichen, wobei ein Schaltsignal zum Hochschalten ausgegeben wird, wenn dieser Grenzwert unterschritten wird. Somit ist die Fahrpedalgeschwindigkeit ein Maß dafür, ob das Getriebe hochschaltet. Des weiteren wird bei diesem bekannten Verfahren vorgeschlagen, daß der Hochschaltvorgang gegebenenfalls beim Überschreiten eines Querbeschleunigungsgrenzwertes unterdrückt wird.

Dieses Verfahren, bei dem eine Hochschaltverhinderung in Abhängigkeit eines negativen Gradienten des Gaspedalwinkels ausgelöst wird, hat sich jedoch in der Praxis dahingehend als nachteilig erwiesen, daß die Hochschaltverhinderung insbesondere bei kurzzeitigen Pedalrücknahmen zu wenig sensibel ist. Es wurde festgestellt, daß die Hochschaltverhinderung häufig zu früh oder zu spät einsetzt, oder daß zu lange oder zu kurz mit einer für die aktuelle Betriebssituation zu hohen Drehzahl gefahren wird. Beides zieht eine deutliche Einschränkung des Fahrkomforts nach sich.

Ein weiteres Verfahren zur Getriebesteuerung ist aus der DE 41 20 566 bekannt, wobei hier zur Aktivierung der Hochschaltverhinderung zusätzlich zum Pedalwinkelgradienten das Kriterium "Schubbetrieb" über eine Zug-Schub-Kennlinie erkannt sein muß. Der Zustand der Hochschaltverhinderung wird verlassen, wenn "Zugbetrieb" erkannt wird und/oder eine Verzögerungszeit verstrichen ist. Zur Gewährleistung eines richtigen Schaltverhaltens bei spontanen Gasrücknahmen hat sich dies jedoch als nicht ausreichend erwiesen.

In der gattungsbildenden DE 198 49 059 A1 oder EP 0 127 507 A wird ein verbessertes Verfahren beschrieben, wobei hier eine spontane Gas-/ Pedalrücknahme (FastOff) erkannt wird und eine Hochschaltverhinderung aktiviert wird, wenn ein Pedalstellungsgradient kleiner ist als eine in einem Kennfeld als Funktion eines Pedalstellungswertes und eines Fahrertyp-Bewertungszählers abgelegte Pedalstellungsgradientenschwelle. Der Zustand der Hochschaltverhinderung ist aktiv, bis ein Zugbetrieb erkannt wird, wenn der aktuelle Pedalstellungswert eine Zug-Schub-Kennlinie, welche in einem Kennfeld als Funktion eines einer Motordrehzahl äquivalenten Wertes und eines einem Fahrbahnneigungswert äquivalenten Beschleunigungspotentialwertes abgelegt ist, überschreitet.

Ergänzend oder alternativ ist der Zustand der Hochschaltverhinderung aktiv, bis eine Zeit nach einem definierten Zeitraum abgelaufen ist, wobei der Zustand der Hochschaltverhinderung nach einem ersten Zeitraum verlassen wird, wenn der Pedalstellungsgradient in der ersten Zeit unter einer positiven Pedalstellungsgradientenschwelle bleibt, und eine zweite Zeit gestartet wird, wenn die positive Pedalstellungsgradientenschwelle überschritten und wieder unterschritten wird, wobei der Zustand der Hochschaltverhinderung nach Ablauf des zweiten Zeitraumes verlassen wird, wenn die positive Pedalstellungsgradientenschwelle in dem zweiten Zeitraum nicht erneut überschritten wird.

Bei diesem bekannten Verfahren sind somit die Kriterien für den Einstieg und den Ausstieg der Funktion "FastOff" erweitert und präzisiert. Der Vorgabe von festen Zeiträumen haftet jedoch stets der Nachteil an, daß dabei das tatsächliche Fahrzeugverhalten nicht ausreichend berücksichtigt werden kann, so daß der Zustand der Hochschaltverhinderung gegebenenfalls zu kurz oder unangemessen lange aufrechterhalten wird.

Der vorliegenden Erfindung liegt die Aufgabe zugrunde, ein Verfahren zur Steuerung eines Automatgetriebes eines Kraftfahrzeuges bei einer spontanen Gas-/ Pedalrücknahme zur Verfügung zu stellen, mit dem eine Hochschaltverhinderung, die nach einer spontanen Pedalrücknahme und einer Fahrgeschwindigkeitsverzögerung eine hohe Spontanität für eine anschließende Beschleunigung erlaubt, solange aktiviert wird, wie dies der Fahrsituation angemessen ist.

Erfindungsgemäß wird diese Aufgabe mit einem Verfahren nach dem Patentanspruch 1 gelöst.

Bei dem erfindungsgemäßen Verfahren wird der Ausstieg aus dem Zustand der Hochschaltverhinderung nach einer spontanen Gas-/Pedalrücknahme in vorteilhafter Weise in Abhängigkeit der Beurteilung der Fahrzeugbeschleunigung/-verzögerung realisiert. Dies hat den Vorteil, daß auf die Vorgabe von starren Verzögerungszeiten, wie sie aus dem Stand der Technik bekannt ist, verzichtet werden kann, da diese durch die dem Fahrzeugverhalten angepaßte Geschwindigkeitsänderung ersetzt werden.

Eine weitere Verbesserung gegenüber dem Stand der Technik stellt die Erkennung eines Schubbetriebes oder Zugbetriebes anhand des aktuellen Motormoments anstatt über die Pedalstellung dar. Überschreitet nämlich das Motormoment eine Kennlinie in Abhängigkeit von der Motordrehzahl, kann sicher davon ausgegangen werden, daß Zugbetrieb vorliegt, während die Beurteilung der Fahrbetriebsart anhand der Pedalstellung deutlich größere Unsicherheiten aufweist. Insbesondere ist dies bei einem elektronischen Gas von Vorteil, bei dem eine Entkopplung des Gaspedales von der Drosselklappe gegeben ist.

Indem die Dauer des Zustandes der Hochschaltverhinderung abhängig ist von der Fahrzeugbeschleunigung/-verzögerung, kann sichergestellt werden, daß bei einer spontanen Gas-/Pedalrücknahme eine gewünschte Fahrzeugverzögerung eintritt bis die Fahrzeugbeschleunigung/-verzögerung einen Wert erreicht hat, der signalisiert, daß der Fahrer in eine Konstantfahrt überzugehen beabsichtigt oder das Fahrzeug wieder signifikant beschleunigen möchte. Die Fahrzeugbeschleunigung/-verzögerung ist dabei in Abhängigkeit eines Gesamtfahrwiderstandes abgelegt, der den Fahrwiderstand und die Fahrzeugmasse beinhaltet und zur höheren Genauigkeit des erfindungsgemäßen Verfahrens vorzugsweise auch Umgebungsbedingungen wie z.B. Berg- oder Gefällefahrt berücksichtigt.

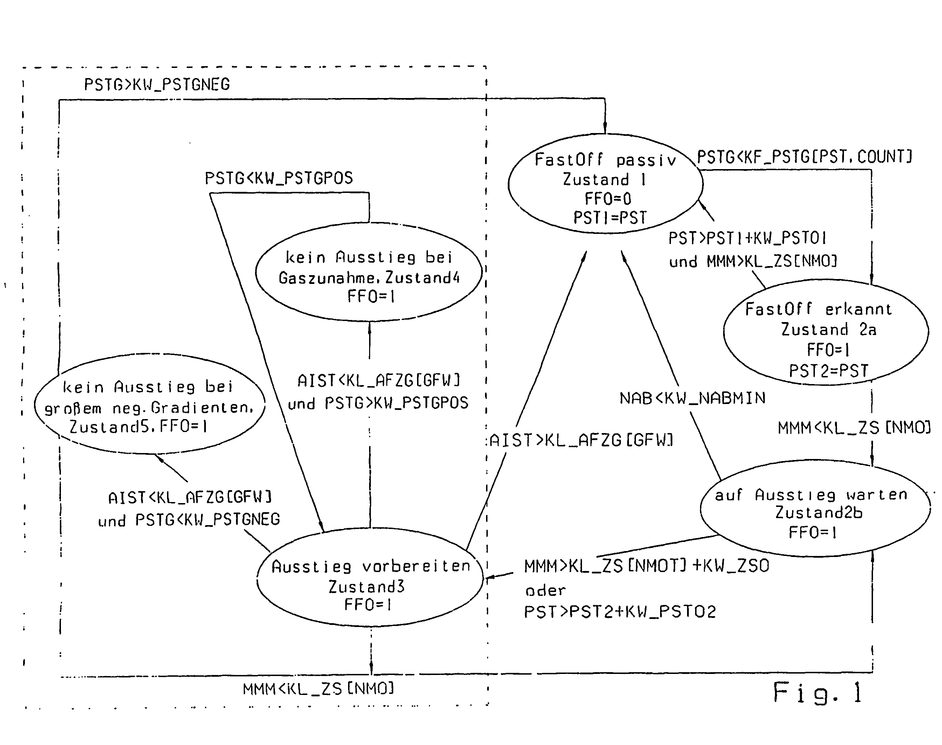

Weitere Vorteile und vorteilhafte Ausführungen der Erfindung ergeben sich aus den Patentansprüchen und aus dem nachfolgend prinzipmäßig anhand der Zeichnung beschriebenen Ausführungsbeispiel.

Die einzige Figur der Zeichnung zeigt eine schematische Darstellung eines erfindungsgemäßen Verfahrens zur Steuerung eines Automatgetriebes eines Kraftfahrzeuges bei einer spontanen Gas-/Pedalrücknahme in einem Zustandsdiagramm.

Mit dem in der Figur schematisch dargestellten Verfahren wird ein Automatgetriebe während einer spontanen Gas-/Pedalrücknahme, welche "FastOff" genannt wird, angesteuert, wobei das Automatgetriebe durch eine mit einem Fahrpedal beeinflußbare Brennkraftmaschine angetrieben wird und eine elektronische Getriebesteuerung aufweist, in der ein Schaltkennfeld abgelegt ist.

Die Struktur des Verfahrens ist in der Figur als Zustandsautomat gezeigt, bei dem immer ein Zustand aktiv ist. Bei jedem Programmdurchlauf werden spezifische Bedingungen in dem jeweiligen Zustand überprüft, und wenn eine dieser Bedingungen zutrifft, dann wird der aktuelle Zustand je nach Bedingung gewechselt. Falls keine der Bedingungen zutrifft, wird der letzte Zustand erneut durchlaufen.

Zunächst wird für einen Zustand 1 definiert, daß keine spontane Gasrücknahme bzw. Pedalrücknahme vorliegt, weshalb der Zustand 1 als "FastOff passiv" bezeichnet ist. Von der elektronischen Getriebesteuerung wird in diesem Zustand 1 erkannt, daß eine den Zustand der spontanen Pedalrücknahme anzeigende Variable FFO (Flag FastOff)mit "0" besetzt ist und damit nicht erfüllt ist. Dementsprechend wird von der elektronischen Getriebesteuerung auch kein Befehl zur Hochschaltverhinderung ausgegeben.

In diesem Zustand 1, bei dem die Hochschaltverhinderung nicht aktiv ist, wird ein aktueller Pedalstellungswert PST als Pedalstellungswert PST1 für den Zustand 1 abgespeichert. Dieser Pedalstellungswert PST kann von der elektronischen Getriebesteuerung aus einem ihr zugeführten Signal der Drosselklappenstellung, welche der Pedalstellung proportional ist, oder aus einem Signal eines elektronischen Gases ermittelt werden, und wird als Ausgangswert zur Berechnung eines Pedalstellungsgradienten PSTG herangezogen.

Im Zustand 1 der nicht aktiven Hochschaltverhinderung wird stets überwacht, ob der aktuelle Pedalstellungsgradient PSTG kleiner ist als eine Pedalgradientenschwelle KF_PSTG[PST, COUNT]. Diese Pedalstellungsgradientenschwelle KF_PSTG ist in einem Kennfeld als Funktion des Pedalstellungswertes PST und eines Fahrertyp-Bewertungszählers COUNT abgelegt, welcher von herkömmlicher Art sein kann, wie er z.B. aus der DE 39 22 051 und der DE 196 18 805 bekannt ist. Mit diesem Fahrertyp-Bewertungszähler COUNT wird somit auch die Sportlichkeit des Fahrverhaltens bei der Erkennung einer spontanen Gas-/Pedalrücknahme berücksichtigt.

Wenn der aktuelle Pedalstellungsgradient PSTG die Pedalstellungsgradientenschwelle KF_PSTG nicht überschreitet, wird die Hochschaltverhinderung gestartet und in einen weiteren Zustand 2a gewechselt, der im Zustandsdiagramm der Figur als Zustand "FastOff erkannt" definiert ist.

In diesem Zustand 2a wird von der Elektronischen Getriebesteuerung die Variablenbesetzung "FFO=1" erkannt. Bei nun aktiver Hochschaltverhinderung wird im Zustand 2a geprüft, ob Zugbetrieb vorliegt, indem das aktuelle Motormoment MMM auf oder über einer von einer Motordrehzahl NMO abhängigen Zug-Schub-Kennlinie KL_ZF[NMO] liegt, und der aktuelle Pedalstellungswert PST größer ist als der Pedalstellungswert PST1 bei Erkennen des spontanen Gas-Pedalrücknahme "FastOff" plus einem Offset-Wert KW_PSTO1. Anstelle der Motordrehzahl NMO kann hier selbstverständlich auch ein ihr äquivalenter Wert überprüft werden.

Wenn hier Zugbetrieb vorliegt und die Pedalstellung größer ist als im Ausgangszustand, dann wird der Zustand der Hochschaltverhinderung "FFO=1" verlassen und wieder in den Zustand 1 mit deaktivierter Hochschaltverhinderung gewechselt.

Falls jedoch das aktuelle Motormoment MMM unter der Zug-Schub-Kennlinie KL_ZS[NMO] liegt, wird auf einen Schubbetrieb erkannt und in einen Zustand 2b gewechselt, der in dem gezeigten Zustandsdiagramm als Zustand für "Auf Ausstieg warten" definiert ist. In diesem Zustand 2b ist die Hochschaltverhinderung "FFO=1" ebenfalls aktiv.

Im Zustand 2b wird überprüft, ob eine minimale Fahrzeuggeschwindigkeit unterschritten wird. Dies wird vorliegend erkannt, wenn eine Getriebeabtriebsdrehzahl NAB kleiner als eine vordefinierte minimale Getriebeabtriebsdrehzahl KW_NABMIN ist. Falls die minimale Fahrzeuggeschwindigkeit unterschritten wird, wird der Zustand der Hochschaltverhinderung verlassen und in den Zustand 1 mit deaktivierter Hochschaltverhinderung zurückgekehrt.

Zudem wird im Zustand 2b überprüft, ob nach erfolgter Gas-/Pedalrücknahme und nachfolgendem Schubbetrieb wieder Zugbetrieb vorliegt.

Ein solcher Zugbetrieb wird sicher erkannt, wenn das aktuelle Motormoment MMM die Zug-Schub-Kennlinie KF_ZS[NMO] plus einem Offset-Wert KW_ZSO übersteigt. Der Offset-Wert KW_ZSO ist eine applizierbare Variable und dient zum Ausgleich von Hysteresen des Motormomentes MMM, so daß sichergestellt ist, daß das Motormoment MMM nicht nur für einen kurzen Moment über seinen Grenzwert gestiegen ist, sondern definitiv in einem Bereich darüber ist.

Alternativ kann die Überprüfung auf Vorliegen eines Zugbetriebes auch über ein deutliches Zunehmen der Pedalstellung erkannt werden, wenn der Vergleich des aktuellen Pedalstellungswertes PST mit einem im Zustand 2a "FastOff erkannt" abgespeicherten Pedalstellungswert PST2 plus einem Offset-Wert KW_PSTO2 ergibt, daß der aktuelle Pedalstellungswert PST darüber liegt.

Bezieht man den bisherigen Verfahrensablauf auf ein reales Fahrverhalten, so hat beispielsweise ein Fahrzeug auf einer Landstraße bei sportlicher Fahrweise aufgrund einer vorausfahrenden Landmaschine stark verzögert, da Gegenverkehr kein Überholen erlaubte. Der Fahrer geht somit spontan vom Gaspedal, und vom Zustand 1 "FastOff passiv" wird in den Zustand 2a "FastOff erkannt" übergegangen. Das Fahrzeug, welches sich nun der zu überholenden Landmaschine nähert, befindet sich im Zustand der Hochschaltverhinderung und verzögert stark, da es in dem zum Überholvorgang vorgesehenen niederen Gang verbleibt. Wenn nun im Zustand 2b "Auf Ausstieg warten" ein Zugbetrieb erkannt wird, muß überprüft werden, ob eine Fahrzeugbeschleunigung/-verzögerung AIST einen Wert erreicht hat, der einer Konstantfahrt entspricht, d.h. daß der Überholvorgang endgültig abgebrochen wurde, oder der eine deutliche Beschleunigung des Fahrzeugs anzeigt, so daß aus der Hochschaltverhinderung ausgestiegen werden kann.

Um zu überprüfen, ob bei eindeutig erkanntem Zugbetrieb eines von mehreren in der Figur gestrichelt umrahmten Ausstiegskriterien aus dem Zustand der Hochschaltverhinderung gegeben ist, wird in einen Zustand 3 gewechselt, der als Zustand für "Ausstieg vorbereiten" definiert ist. Beim Ausstieg aus dem Zustand der Hochschaltverhinderung wird in drei Fälle unterschieden, wobei die Kriterien dieser drei Fälle Pedalgradienten, Schwellen und Grenzwerte der Fahrzeugbeschleunigung/-verzögerung AIST in Abhängigkeit von einem Gesamtfahrwiderstand GFW sind.

Als erstes soll der Fall betrachtet werden, daß im Zustand 3 "Ausstieg vorbereiten" erkannt wird, daß die Fahrzeugbeschleunigung/-verzögerung AIST eine in Abhängigkeit des unter anderem die Fahrbahnneigung berücksichtigenden Gesamtfahrwiderstandes GFW abgelegte Schwelle KL_AFZG[GFW] überschreitet. Falls dies der Fall ist, wird der Zustand 3 verlassen und in den Zustand 1 der deaktivierten Hochschaltverhinderung gewechselt.

Des weiteren besteht die Möglichkeit, daß die Fahrzeugbeschleunigung/-verzögerung AIST kleiner ist als die vorgegebene Schwelle KL_AFZG[GFW] und der Pedalstellungsgradient PSTG eine positive Pedalgradientenschwelle KW_PSTGPOS überschreitet. In diesem Fall wird von dem Zustand 3 "Ausstieg vorbereiten" in einen Zustand 4 gewechselt, in dem trotz Gaszunahme die Hochschaltverhinderung noch aktiv ist. Sinkt der Pedalgradient PSTG wieder unter die positive Pedalgradientenschwelle KW_PSTGPOS, so wird wieder in den vorigen Zustand 3 "Ausstieg vorbereiten" gewechselt. Dieser Fall tritt dann ein, wenn der Pedalgradient PST zu einem Aufheben der Hochschaltverhinderung hin tendiert, jedoch das Fahrzeugverhalten noch keine Reaktion zeigt, da es beispielsweise aufgrund einer Steigung nur sehr langsam beschleunigt. Erst wenn eine deutliche Fahrzeugbeschleunigung vorliegt, die dem hohen Pedalgradienten PSTG nachfolgt, kann die Hochschaltverhinderung aufgehoben werden. Dabei wird dann wie bei dem zuletzt beschriebenen Fall vorgegangen, bei dem die Fahrzeugbeschleunigung/-verzögerung die Schwelle KL_AFZG[GFW] überschreitet.

Die beiden bisher diskutierten Fälle eines Verlassens der Hochschaltverhinderung verhindern nicht erwünschtes Hochschalten während der Gaszunahme und stellen sicher, daß der Ausstieg erst eingeleitet wird, wenn sicher eine konstante Gaspedalstellung erkannt ist und/oder eine signifikante Fahrzeugbeschleunigung vorliegt.

Des weiteren ist in dem Zustandsdiagramm der Figur für den Ausstieg aus dem Zustand der Hochschaltverhinderung der Fall dargestellt, daß bei erkanntem Zugbetrieb eine zweite negative Pedalgradientenschwelle KW_PSTNEG unterschritten wird und die Fahrzeugbeschleunigung/-verzögerung AIST kleiner ist als die Schwelle AFZG[GFW]. Dann wird in einen weiteren Zustand 5 gewechselt, welcher in dem Zustandsdiagramm für "kein Ausstieg bei großem negativen Gradienten" definiert ist. Dieser Zustand 5, bei dem die Hochschaltverhinderung noch aktiv ist, wird erst verlassen, wenn entweder der Pedalgradient PSTG die negative Pedalgradientenschwelle KW_PSTNEG wieder überschreitet, wobei dann direkt in den Zustand 1 "FastOff passiv" übergegangen wird, oder wenn Schubbetrieb erkannt wird, indem das aktuelle Motormoment MMM unter der Zug-Schub-Kennlinie KL_ZS[NMO] liegt, wobei dann direkt in den Zustand 2b "Auf Ausstieg warten" übergegangen wird.

Dieser zuletzt diskutierte Fall des Ausstiegs aus der Hochschaltverhinderung tritt dann ein, wenn der Fahrer nach Auslösen der Hochschaltverhinderung wiederholt das Gaspedal leicht, z.B. um 30 %, durchdrückt und erst jetzt das Gaspedal ganz verläßt. Wird also im Zustand 3 "Ausstieg vorbereiten" das Gaspedal schnell losgelassen, so wird angenommen, daß der Fahrer die Hochschaltverhinderung aufheben will.

In jedem Fall wird von dem Zustand 3 "Ausstieg vorbereiten" wieder in den Zustand 2b "Auf Ausstieg warten" zurückgekehrt, wenn anhand des aktuellen Motormomentes MMM ein Schubbetrieb erkannt wird.

Die bei den beiden zuletzt diskutierten Ausstiegsfällen verwendeten positiven und negativen Pedalgradientenschwellen KW_PSTGPOS, KW_PSTGNEG sind jeweils in Abhängigkeit von der Pedalstellung PST und dem Fahrertyp-Bewertungszähler COUNT, dessen Größen wiederum in einem Programmodul der elektronischen Getriebesteuerung zur Auswertung des Fahrverhaltens ermittelt werden, festgelegt.

Es versteht sich, daß der Zustand der Hochschaltverhinderung in allen beschriebenen Zuständen nur dann aktiv ist, wenn eine maximale Motorbegrenzungsdrehzahl nicht überschritten wird, um eine Motor- und/oder Getriebeschädigung zu vermeiden.

### Bezugszeichen

- AIST: Fahrzeugbeschleunigung in Abhängigkeit vom Gesamtfahrwiderstand
- COUNT: Fahrertyp-Bewertungszähler
- FastOff: spontane Gas-/ Pedalrücknahme
- FFO: Flag für Hochschaltverhinderung
- GFW: Gesamtfahrwiderstand, Beschleunigungspotential (Bergerkennung/Fahrwiderstand)
- KF_PSTG: Pedalgradientenschwelle, f(PST, COUNT)
- KL_AFZG: Schwelle für Fahrzeugbeschleunigung/-verzögerung
- KL_ZS: Zug-Schub-Kennlinie, f(NMO)
- KW_NABMIN: Minimale Abtriebsdrehzahl in FastOff
- KW_PSTGNEG: negative Pedalstellungsgradientenschwelle
- KW_PSTGPOS: positive Pedalstellungsgradientenschwelle
- KW_PSTO1: Offset-Wert, um sicher Zugbetrieb zu erkennen
- KW_PSTO2: Offset-Wert, um Zunahme des Pedalstellungswertes auszuschließen
- KW_ZSO: Drosselklappenoffset zum Ausstieg aus FastOff
- MMM: Aktuelles Motormoment
- NAB: Getriebeabtriebsdrehzahl
- NAB_MIN: minimale Getriebeabtriebsdrehzahl
- NMO: Motordrehzahl
- PST: Pedalstellung
- PST1: Pedalstellungswert, Drosselklappenwert bei Erkennen von FastOff
- PST2: Pedalstellungswert, Drosselklappenwert
- PSTG: Pedalstellungsgradient

## Patentansprüche

1. Verfahren zur Steuerung eines Automatgetriebes eines Kraftfahrzeuges bei einer spontanen Gas-/Pedatrücknahme (FastOff); wobei das Automatgetriebe durch eine mit einem Fahrpedal beeinflußbare Brennkraftmaschine angetrieben wird und ein einer Pedalstellung proportionales Signal einer elektronischen Getriebesteuerung zugeführt wird, in der ein Schaltkennfeld abgelegt ist; und wobei die spontane Gas-/Pedalrücknahme (FastOff) erkannt wird und eine Hochschaltverhinderung (FFO=1) aktiviert wird, wenn ein Pedaistetlungsgradient (PSTG) kleiner ist als eine Pedalgradientenschwelle (KF_PSTG), **dadurch gekennzeichnet, daß** der Zustand der Hochschaitverhinderung (FFO=1) in Abhängigkeit einer von einem Gesamtfahrwiderstand (GFW) abhängigen Fahrzeugbeschleunigung/-verzögerung (AIST) und Pedalgradientenschwellen (KW_PSTGPOS, KW_PSTGNEG) aufgehoben wird, wenn ein Zugbetrieb erkannt wird, indem ein aktuelles Motormoment (MMM) eine Zug-Schub-Kennlinie (KL_ZS), die als Funktion eines zu einer Motordrehzahl (NMO) äquivalenten Wertes in der elektronischen Getriebesteuerung abgelegt ist, überschreitet.

2. Verfahren nach Anspruch 1, **dadurch gekennzeichnet, daß** der Zustand der Hochschaltverhinderung (FFO=1) verlassen wird, wenn Zugbetrieb erkannt wird und der aktuelle Pedalstellungswert (PST) größer ist als der Pedalstellungswert (PST1) bei Erkennen der spontanen Gas-/Pedalrücknahme (FastOff) plus einem Offset-Wert (KW_PSTO1).

3. Verfahren nach Anspruch 1 oder 2, **dadurch gekennzeichnet, daß** der Zustand der Hochschaltverhinderung (FFO=1) verlassen wird, wenn eine minimale Fahrzeuggeschwindigkeit unterschritten wird.

4. Verfahren nach einem der Ansprüche 1 bis 3, **dadurch gekennzeichnet, daß** die Hochschaltverhinderung (FFO=1) aufgehoben wird, wenn bei erkanntem Zugbetrieb die Fahrzeugbeschleunigung/-verzögerung (AIST) größer ist als eine in einer Kennlinie in Abhängigkeit eines Gesamtfahrwiderstandes (GFW) abgelegte Schwelle (KL_AFZG) und/oder eine wenigstens annähernd konstante Pedalstellung erkannt wird.

5. Verfahren nach einem der Ansprüche 1 bis 4, **dadurch gekennzeichnet, daß** die Hochschaltverhinderung (FFO=1) aufgehoben wird, wenn bei erkanntem Zugbetrieb eine negative Pedalgradientenschwelle (KW PSTGNEG) unterschritten und anschließend überschritten wird.

6. Verfahren nach einem der Ansprüche 1 bis 5, **dadurch gekennzeichnet, daß** nach Erkennen einer spontanen Gas-/Pedalrücknahme (FastOff) und eines anschließenden Schubbetriebes von einem Zustand "Auf Ausstieg warten" in einen Zustand "Ausstieg vorbereiten" gewechselt wird, wenn Zugbetrieb erkannt wird, indem das aktuelle Motormoment (MMM) auf oder über der von der Motordrehzahl (NMO) abhängigen Zug-Schub-Kennlinie (KL_ZS) plus einem Offset-Wert (KW_ZSO) liegt.

7. Verfahren nach einem der Ansprüche 1 bis 5, **dadurch gekennzeichnet, daß** nach Erkennen einer spontanen Gas-/Pedalrücknahme (FastOff) und eines anschließenden Schubbetriebes von einem Zustand "Auf Ausstieg warten" in einen Zustand "Ausstieg vorbereiten" gewechselt wird, wenn der aktuelle Pedalstellungswert (PST) größer ist als der Pedalstellungswert (PST2) zum Zeitpunkt der spontanen Gas-/Pedalrücknahme (FastOff) plus einem Offset-Wert (KW_PSTO2).

8. Verfahren nach Anspruch 6 oder 7, **dadurch gekennzeichnet, daß** von dem Zustand "Ausstieg vorbereiten" in den Zustand "Auf Ausstieg warten" zurückgekehrt wird, wenn wieder Schubbetrieb erkannt wird, indem das aktuelle Motormoment (MMM) bei aktivierter Hochschaltverhinderung (FFO=1) unter der Zug-Schub-Kennlinie (KL_ZS) liegt.

9. Verfahren nach wenigstens einem der vorgehenden Ansprüche, **dadurch gekennzeichnet, daß** die Hochschaltverhinderung (FFO=1) aktiv bleibt, wenn die Fahrzeugbeschleunigung /-verzögerung (AIST) kleiner ist als eine die in Abhängigkeit des Gesamtfahrwiderstandes (GFW) abgelegte Schwelle (KL_AFZG), während eine positive Pedalstellungsgradientenschwelle (KW_PSTGPOS) überschritten wird.

10. Verfahren nach Anspruch 9, **dadurch gekennzeichnet, daß** in den Zustand "Ausstieg vorbereiten" verzweigt wird, wenn der Pedalgradient (PSTG) wieder unter die positive Pedalgradientenschwelle (KW_PSTGPOS) sinkt.

11. Verfahren nach wenigstens einem der vorgehenden Ansprüche, **dadurch gekennzeichnet, daß** die Hochschaltverhinderung (FFO=1) aktiv bleibt, wenn die Fahrzeugbeschleunigung/-verzögerung (AIST) kleiner ist als die in Abhängigkeit des Gesamtfahrwiderstandes (GFW) abgelegte Schwelle (KL_AFZG), während eine negative Pedalgradientenschwelle (KW_PSTGNEG) unterschritten wird, wobei der Zustand der Hochschaltverhinderung (FFO=1) verlassen wird, wenn die negative Pedalgradientenschwelle (KW_PSTGNEG) überschritten wird.

12. Verfahren nach wenigstens einem der vorgehenden Ansprüche, **dadurch gekennzeichnet, daß** die positive und/oder die negative Pedalstellungsgradientenschwelle (KW_PSTGPOS, KW_PSTGNEG) abhängig von der Pedalstellung (PST) und dem Fahrertyp-Bewertungszähler (COUNT) festgelegt wird.

13. Verfahren nach wenigstens einem der vorhergehenden Ansprüche, **dadurch gekennzeichnet, daß** die Pedalgradientenschwelle (KF_PSTG) in einem Kennfeld als Funktion eines Pedalstellungswertes (PST) und eines Fahrertyp-Bewertungszählers (COUNT) abgelegt ist.

14. Verfahren nach wenigstens einem der vorhergehenden Ansprüche, **dadurch gekennzeichnet, daß** die Größen des Fahrertyp-Bewertungszähler (COUNT) in einem Programmodul der elektronischen Getriebesteuerung zur Auswertung des Fahrverhaltens ermittelt werden.

15. Verfahren nach wenigstens einem der vorhergehenden Ansprüche, **dadurch gekennzeichnet, daß** der Zustand der Hochschattverhinderung (FFO=1) deaktiviert wird, wenn eine maximale Motordrehzahl (NMO_MAX) überschritten wird.

## Claims

1. The invention relates to a method for controlling an automatic transmission of a motor vehicle when the gas pedal is spontaneously released (FastOff); with the automatic transmission being driven by an accelerator-influenced combustion engine and a signal proportional to the pedal position being fed to an electronic transmission CU in which shifting characteristics are stored; and with spontaneous gas pedal release (FastOff) being detected and an upshift lock (FFO=1) activated when a pedal position gradient (PSTG) is lower than a pedal gradient threshold (KF_PSTG), **characterized in that** the upshift lock condition (FFO=1) is cancelled depending on vehicle acceleration/deceleration (AIST) and pedal gradient thresholds (KW_PSTGPOS, KW_PSTGNEG) conditional on a total road resistance (GWF) when acceleration is recognized, with a current engine torque (MMM) exceeding an acceleration/deceleration characteristic (KL_ZS), which is stored in the electronic transmission CU as a function of a variable equivalent to an engine speed (NMO).

2. A method according to claim 1, **characterized in that** the upshift lock condition (FFO=1) is abandoned when acceleration is recognized and the current pedal position value (PST) exceeds the pedal position value (PST1) when spontaneous gas pedal release (FastOff) is recognized, plus an offset value (KW_PSTO1).

3. A method according to claim 1 or 2, **characterized in that** the upshift lock condition (FFO=1) is abandoned when a minimum driving speed is not reached.

4. A method according to one of the claims 1 through 3, **characterized in that** the upshift lock (FFO=1) is cancelled if during a recognized acceleration the acceleration/deceleration of the vehicle (AIST) exceeds a threshold (KL_AFZG) stored in a characteristic conditional on a total road resistance (GFW) and/or a pedal position is recognized which is at least approximately constant.

5. A method according to one of the claims 1 through 4, **characterized in that** the upshift lock (FFO=1) is cancelled if during a recognized acceleration a negative pedal gradient threshold (KW_PSTGNEG) is first not reached and subsequently exceeded.

6. A method according to one of the claims 1 through 5, **characterized in that** after recognition of a spontaneous gas pedal release (FastOff) and a subsequent acceleration, a changeover from an "Await Exit" to a "Prepare Exit" condition takes place when acceleration is recognized, with the current engine torque (MMM) being at or above the level of the engine-speed/ (NMO)-dependent acceleration/deceleration characteristic (KL_ZS) plus an offset value (KW_ZSO).

7. A method according to one of the claims 1 through 5, **characterized in that** after recognition of a spontaneous gas pedal release (FastOff) and a subsequent acceleration, a changeover from an "Await Exit" to a "Prepare Exit" condition takes place when the current pedal position value (PST) exceeds the pedal position value (PST2) at the time of spontaneous gas pedal release (FastOff) plus an offset value (KW_PSTO2).

8. A method according to claim 6 or 7, **characterized in that** the "Prepare Exit" condition is abandoned for the "Await Exit" condition when acceleration is recognized again, with the current engine torque (MMM) with activated upshift lock (FFO=1) being below the acceleration/deceleration characteristic (KL_ZS).

9. A method according to at least one of the preceding claims, **characterized in that** the upshift lock (FFO=1) remains active if the vehicle acceleration/deceleration (AIST) is lower than a stored threshold (KL_AFZG) conditional on the total road resistance while a positive pedal position gradient threshold (KW_PSTGPOS) is exceeded.

10. A method according to claim 9, **characterized in that** changeover to the "Prepare Exit" condition takes place when the pedal gradient (PSTG) once again falls below the positive pedal gradient threshold (KW_PSTGPOS).

11. A method according to at least one of the preceding claims, **characterized in that** the upshift lock (FFO=1) remains active if the level of vehicle acceleration/deceleration (AIST) is lower than the stored threshold (KL_AFZG) conditional on the total road resistance (GFW) while a negative pedal gradient threshold (KW_PSTGNEG) is not reached, with the upshift lock (FFO=1) condition being abandoned when the negative pedal gradient threshold (KW_PSTGNEG) is exceeded.

12. A method according to at least on of the preceding claims, **characterized in that** the positive and/or negative pedal gradient thresholds (KW_PSTGPOS, KW_PSTGNEG) are defined conditional on the pedal position (PST) and driver type rating (COUNT).

13. A method according to at least one of the preceding claims, **characterized in that** the pedal gradient threshold (KF_PSTG) is stored in a map as a function of a pedal position value (PST) and a driver type rating (COUNT).

14. A method according to at least one of the preceding claims, **characterized in that** the variables of vehicle type rating (COUNT) are determined in a driver rating program module of the electronic transmission control unit.

15. A method according to at least one of the preceding claims, **characterized in that** the upshift lock (FFO=1) is deactivated when a maximum engine speed (NMO_MAX) is exceeded.

## Revendications

1. Procédé de commande d'une transmission automatique d'un véhicule automobile lors d'un retrait spontané de l'accélération ou de la pédale (fast-off); dans lequel la transmission automatique est entraînée par un moteur à combustion interne actionné avec une pédale d'accélération et un signal proportionnel à une position de la pédale est entré dans une commande électronique de transmission dans laquelle un diagramme caractéristique est enregistré; et dans lequel le retrait spontané de l'accélération ou de la pédale (fast-off) est détecté et un empêchement d'enclenchement d'un rapport supérieur (FFO=1) est activé lorsqu'un gradient de position de pédale (PSTG) est inférieur à un seuil de gradient de pédale (KF_PSTG), **caractérisé en ce que** l'état de l'empêchement de l'enclenchement d'un rapport supérieur (FFO=1) est abandonné en fonction d'une accélération ou d'un ralentissement du véhicule (AIST) et d'un seuil de gradient de pédale (KW_PSTGPOS, KW_PSTGNEG), dépendant de la résistance totale à la marche (GFW), lorsqu'un fonctionnement en traction est détecté grâce au fait que le couple actuel du moteur (MMM) dépasse une courbe caractéristique de traction-poussée (KL_ZS) qui est enregistrée dans la commande électronique de transmission en fonction d'une valeur équivalente à la vitesse de rotation du moteur (NMO).

2. Procédé selon la revendication 1, **caractérisé en ce que** l'état d'empêchement de l'enclenchement d'un rapport supérieur (FFO=1) est abandonné lorsque le fonctionnement en traction est détecté et lorsque la valeur de position de la pédale actuelle (PST) est supérieure à la valeur de position de la pédale (PST1) lors de la détection du retrait spontané de l'accélération ou de la pédale (fast-off) plus une valeur d'offset (KW_PSTO1).

3. Procédé selon la revendication 1 ou 2, **caractérisé en ce que** l'état d'empêchement de l'enclenchement d'un rapport supérieur (FFO=1) est abandonné lorsque la vitesse du véhicule est inférieure à la vitesse minimale du véhicule.

4. Procédé selon l'une des revendications 1 à 3, **caractérisé en ce que** l'empêchement de l'enclenchement d'un rapport supérieur (FFO=1) est abandonné lorsque, lors de la détection d'un fonctionnement en traction, l'accélération ou le ralentissement du véhicule (AIST) est supérieur à un seuil (KL_AFZG) enregistré dans une courbe caractéristique en fonction d'une résistance totale à la marche (GFW) et/ou lorsqu'une position de la pédale au moins approximativement constante est détectée.

5. Procédé selon l'une des revendications 1 à 4, **caractérisé en ce que** l'empêchement de l'enclenchement d'un rapport supérieur (FFO=1) est abandonné lorsque, lors de la détection d'un fonctionnement en traction, le gradient de pédale est inférieur puis supérieur à un seuil négatif de gradient de pédale (KW_PSTGNEG).

6. Procédé selon l'une des revendications 1 à 5, **caractérisé en ce que**, après la détection d'un retrait spontané de l'accélération ou de la pédale (fast-off) et d'un fonctionnement en poussée suivant, on passe d'un état "attendre l'abandon" à un état "préparer l'abandon", lorsque le fonctionnement en traction est détecté, grâce au fait que le couple moteur actuel (MMM) se trouve sur ou au-dessus de la courbe caractéristique traction-poussée (KL_ZS) en fonction de la vitesse de rotation du moteur (NMO), plus une valeur d'offset (KW_ZSO).

7. Procédé selon l'une des revendications 1 à 5, **caractérisé en ce que**, après la détection d'un retrait spontané de l'accélération ou de la pédale (fast-off) et d'un fonctionnement en poussée suivant, on passe d'un état "attendre l'abandon" à un état "préparer l'abandon", lorsque la valeur de la position actuelle de la pédale (PST) est supérieure à la valeur de la position de la pédale (PST2) à l'instant du retrait spontané de l'accélération ou de la pédale (fast-off) plus une valeur d'offset (KW_PST02).

8. Procédé selon la revendication 6 ou 7, **caractérisé en ce que** l'on retourne de l'état "préparer l'abandon" vers l'état "attendre l'abandon", lorsque le fonctionnement en poussée est à nouveau détecté, grâce au fait que le couple moteur actuel (MMM) se trouve sous la courbe caractéristique traction-poussée (KL_ZS) lorsque l'empêchement d'un rapport supérieur (FFO=1) est activé.

9. Procédé selon au moins l'une des revendications précédentes, **caractérisé en ce que** l'empêchement de l'enclenchement d'un rapport supérieur (FFO=1) reste actif lorsque l'accélération ou le ralentissement du véhicule (AIST) est inférieur à un seuil (KL_AFZG) enregistré en fonction de la résistance totale à la marche (GFW) tandis qu'un seuil positif de gradient de position de pédale (KW_PSTGPOS) est dépassé.

10. Procédé selon la revendication 9, **caractérisé en ce que** l'on bifurque vers l'état "préparer l'abandon" lorsque le gradient de la pédale (PSTG) tombe à nouveau en dessous du seuil positif du gradient de pédale (KW_PSTGPOS).

11. Procédé selon au moins l'une des revendications précédentes, **caractérisé en ce que** l'empêchement de l'enclenchement d'un rapport supérieur (FFO=1) reste actif lorsque l'accélération ou le ralentissement du véhicule (AIST) est inférieur à un seuil (KL_AFZG) enregistré en fonction de la résistance totale à la marche (GFW) tandis que le gradient de pédale est en dessous d'un seuil négatif de gradient de pédale (KW_PSTGNEG), l'état de l'empêchement d'un rapport supérieur (FFO=1) étant abandonné lorsque le seuil négatif de gradient de pédale (KW_PSTGNEG) est dépassé.

12. Procédé selon au moins l'une des revendications précédentes, **caractérisé en ce que** le seuil positif et/ou négatif de gradient de position de pédale (KW_PSTGPOS, KW_PSTGNEG) est fixé en fonction de la position de la pédale (PST) et du compteur d'analyse du type de conducteur (COUNT).

13. Procédé selon au moins l'une des revendications précédentes, **caractérisé en ce que** le seuil de gradient de pédale (KF_PSTG) est enregistré dans un diagramme caractéristique en fonction d'une valeur de la position de la pédale (PST) et d'un compteur d'analyse du type de conducteur (COUNT).

14. Procédé selon au moins l'une des revendications précédentes, **caractérisé en ce que** les valeurs du compteur d'analyse du type de conducteur (COUNT) sont déterminées dans un module de programme de la commande électronique de la transmission pour l'analyse du comportement du conducteur.

15. Procédé selon au moins l'une des revendications précédentes, **caractérisé en ce que** l'état de l'empêchement de l'enclenchement d'un rapport supérieur (FFO=1) est désactivé lorsqu'une vitesse de rotation maximale du moteur (NMO_MAX) est dépassée.
